(19) Europäisches Patentamt
European Patent Office
Office européen des brevets

(11) **EP 3 570 002 B1**

(12) **FASCICULE DE BREVET EUROPEEN**

(45) Date de publication et mention de la délivrance du brevet:
**09.12.2020 Bulletin 2020/50**

(51) Int Cl.:
***G01N 3/08*** *(2006.01)* ***G01N 3/20*** *(2006.01)*

(21) Numéro de dépôt: **19174223.8**

(22) Date de dépôt: **13.05.2019**

(54) **MÉTHODE DE CARACTÉRISATION DE LA RÉSISTANCE À L'EFFORT TRANCHANT D'UNE POUTRE, ET SYSTÈME ASSOCIÉ**

METHODE ZUR CHARAKTERISIERUNG DER SCHERFESTIGKEIT EINES BALKENS, UND ENTSPRECHENDES SYSTEM

METHOD FOR CHARACTERISING THE RESISTANCE TO CUTTING FORCE OF A BEAM, AND ASSOCIATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.05.2018 FR 1854020**

(43) Date de publication de la demande:
**20.11.2019 Bulletin 2019/47**

(73) Titulaire: **Centre Scientifique et Technique du Batiment**
**77420 Champs sur Marne (FR)**

(72) Inventeurs:
• **PINOTEAU, Nicolas**
**78750 Mareil Marly (FR)**
• **PHAM, Duc Toan**
**77420 Champs-sur-Marne (FR)**
• **RIVILLON, Philippe**
**77000 COUPVRAY (FR)**
• **CHENAF, Ménad**
**77340 Pontault-Combault (FR)**
• **MEGE, Romain**
**93110 ROSNY-SOUS-BOIS (FR)**

(74) Mandataire: **Jacobacci Coralis Harle**
**32, rue de l'Arcade**
**75008 Paris (FR)**

(56) Documents cités:
WO-A1-2016/001426    US-A1- 2015 276 570
US-A1- 2017 191 916    US-B1- 6 332 364
US-B1- 6 918 306

EP 3 570 002 B1

## Description

La présente invention concerne de manière générale le domaine des essais de rupture de poutres, en particulier de poutres pour bâtiment, infrastructure ou ouvrage d'art, telles que des poutres en béton armé.

Elle concerne plus précisément une méthode de caractérisation de la résistance à l'effort tranchant d'une poutre comprenant une portion d'épreuve qui s'étend entre deux portions d'extrémité de la poutre, au cours de laquelle :

- la poutre prend appui transversalement sur un premier appui et sur un deuxième appui, et au cours de laquelle
- un vérin principal exerce sur la poutre une force de mise en flexion, ladite force étant appliquée entre le premier appui et le deuxième appui, transversalement par rapport à la poutre.

Elle concerne également un système associé pour caractériser la résistance à l'effort tranchant d'une telle poutre, notamment lors de l'application d'un effort normal de traction appliqué parallèlement à un axe longitudinal de la poutre. US 6 918 306 B1, US 2017/191916 A1, US 6 332 364 B1, US 2015/276570 A1 et WO 2016/001426 A1 divulguent des autres méthodes de caractérisation de la résistance à l'effort tranchant d'une poutre.

## ARRIERE-PLAN TECHNOLOGIQUE

Pour tester la résistance à l'effort tranchant d'une poutre, par exemple une poutre pour bâtiment en béton armé, il est connu d'installer la poutre sur deux appuis, puis d'exercer une force perpendiculairement à l'axe de la poutre, entre le premier appui et le deuxième appui (cette configuration est parfois appelée flexion « 3 points », ou flexion « 4 points » si le vérin agit sur la poutre via deux appuis). La poutre ainsi mise en flexion est alors soumise à la fois à un moment de flexion, et au gradient de ce moment de flexion, qui correspond à l'effort tranchant.

L'application d'un effort tranchant important implique alors le développement dans la poutre d'un fort moment de flexion.

Pour éviter que la ruine par flexion ne se produise avant celle due à l'effort tranchant, on utilise alors habituellement des poutres présentant un ferraillage longitudinal très important, ou présentant une section dimensionnée spécifiquement pour résister à de très forts moments fléchissant.

Mais de telles poutres sont peu représentatives des celles réalisées en pratique dans les bâtiments, infrastructures urbaines ou routières, ouvrages d'art et autres constructions.

En outre, en présence d'un effort normal de traction, la ruine par flexion est facilitée, si bien qu'il est encore plus difficile d'atteindre la rupture par effort tranchant avant celle par flexion.

## OBJET DE L'INVENTION

Afin de remédier à l'inconvénient précité de l'état de la technique, la présente invention propose une méthode de caractérisation de la résistance à l'effort tranchant d'une poutre, telle que définie par la revendication 1.

Dans cette méthode, le moment fléchissant de compensation joue le rôle d'un contre-moment qui compense, au moins en partie, le moment fléchissant développé dans la poutre du fait de l'application par le vérin principal de l'effort tranchant souhaité (c'est-à-dire du fait de l'application de de ladite force de mise en flexion).

Le moment fléchissant de compensation permet plus précisément de réduire le moment fléchissant total subi par la poutre, tout en conservant un effort tranchant élevé.

Appliquer ce moment fléchissant de compensation, en plus de la force exercée par le vérin principal, permet alors d'atteindre la rupture par effort tranchant avant d'atteindre la rupture due au moment de flexion, et cela y compris pour des poutres dont le ferraillage et la section sont réalistes, représentatives de poutres employées en pratique dans les bâtiments, infrastructures, et ouvrages d'art.

Par ailleurs, l'application du moment fléchissant de compensation permet d'étudier l'effet d'une valeur positive du moment fléchissant total (le moment fléchissant dû à l'action du vérin principal étant quant à lui négatif) sur la résistance à l'effort tranchant de la poutre, ce que ne permet pas une configuration de flexion à trois ou quatre points d'appuis.

D'autres caractéristiques non limitatives et avantageuses de la méthode de caractérisation conforme à l'invention, prises individuellement ou selon toutes les combinaisons techniquement possibles, sont définies par les revendications 2 à 6.

La méthode de caractérisation conforme à l'invention peut comprendre en outre une ou plusieurs des caractéristiques non limitatives et avantageuses suivantes, prises individuellement ou selon toutes les combinaisons techniquement possibles :

- la poutre est une poutre de bâtiment, d'ouvrage d'art, ou d'infrastructure routière ;
- la poutre est en béton armé ;
- les deux vérins additionnels et le vérin principal sont pilotés de manière à ce que ladite rupture résulte de l'effort tranchant exercé sur la poutre ;
- ledit moment de rupture, prédéterminé, est égal à un moment de rupture constaté lors d'essais de rupture préliminaires, réalisés sur une ou plusieurs poutres de test identiques à ladite poutre, lesdites forces de contre-flexion n'étant pas appliqués lors desdits essais ;

- ledit moment de rupture, prédéterminé, est égal à un moment de rupture théorique de ladite poutre, déterminé par calculs conformément à un code de calcul normalisé ou réglementaire ;

- ledit moment de rupture, prédéterminé, est égal à un autre moment de rupture théorique de ladite poutre, déterminé par des calculs réalisés conformément à une méthode de calcul spécifique, cette méthode de calcul ayant été préalablement validée par confrontation avec des essais préliminaires de rupture ou par confrontation avec un code de calcul normalisé ou réglementaire ;

- les deux vérins additionnels agissent sur les portions d'extrémité de la poutre tout en laissant ces portions d'extrémités libres de se déplacer perpendiculairement par rapport à un axe longitudinal de la poutre ;

- la poutre présente un ferraillage longitudinal plus important d'un côté du point d'application de ladite force de mise en flexion que de l'autre côté de ce point d'application.

L'invention concerne également un système pour caractériser la résistance à l'effort tranchant d'une poutre tel que défini par la revendication 7.

D'autres caractéristiques non limitatives et avantageuses du système de caractérisation conforme à l'invention, prises individuellement ou selon toutes les combinaisons techniquement possibles, sont définies par les revendications 8 à 11.

La méthode de caractérisation conforme à l'invention peut comprendre en outre une ou plusieurs des caractéristiques non limitatives et avantageuses suivantes, prises individuellement ou selon toutes les combinaisons techniquement possibles :

- chaque vérin additionnel est relié, d'une part, à la première bride, et d'autre part à la deuxième bride, les première et deuxième bride et les deux vérins additionnels formant un cadre à quatre montants ;

- le système comprend une pièce d'appui montée à une extrémité du vérin principal pour transmettre à la poutre ladite force de mise en flexion exercée par le vérin principal, une première distance sépare le premier appui et ladite pièce s'appui, une deuxième distance sépare le deuxième appui et ladite pièce s'appui, et un écart relatif entre la première distance et la deuxième distance est supérieur à 10 % ;

- l'unité de commande est configurée pour piloter les deux vérins additionnels de manière à ce qu'un moment fléchissant total subi par la poutre soit inférieur au moment fléchissant dû à ladite force de mise en flexion exercée par le vérin principal ;

- l'unité de commande est configurée pour piloter les deux vérins additionnels et le vérin principal de manière à ce ladite rupture résulte de l'effort tranchant exercé sur la poutre.

D'autres caractéristiques optionnelles de la méthode de caractérisation décrite ci-dessus peuvent aussi être appliquées au système de caractérisation qui vient d'être présenté.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1A représente schématiquement une configuration de mise sous contrainte d'une poutre, employée pour caractériser expérimentalement la résistance à l'effort tranchant de cette poutre,

- les figures 1B à 1E représentent schématiquement l'évolution, le long de la poutre de la figure 1A, de différents moments de flexion développés dans cette poutre, et de l'effort tranchant qu'elle subit,

- la figure 2 représente schématiquement, en perspective, un système pour caractériser expérimentalement la résistance à l'effort tranchant d'une poutre, mettant en œuvre les enseignements de l'invention,

- la figure 3 représente schématiquement une partie du système de la figure 2, vu de côté,

- la figure 4 représente schématiquement, en perspective, une bride du système de la figure 2,

- la figure 5 représente schématiquement une poutre dont la résistance à l'effort tranchant peut être caractérisée au moyen du système de la figure 2,

- la figure 6 représente les principales étapes d'une méthode de caractérisation expérimentale de la résistance à l'effort tranchant d'une poutre, mettant en œuvre les enseignements de l'invention,

- la figure 7 représente schématiquement l'évolution du moment de rupture d'une poutre, en fonction d'une force longitudinale exercée sur cette poutre,

- la figure 8 représente schématiquement un exemple de séquence de mise sous contrainte de la poutre,

- la figure 9 représente schématiquement l'une des étapes de la méthode de la figure 6, plus en détail, pour un autre exemple de séquence de mise sous contrainte de la poutre,

- la figure 10 représente schématiquement l'évolution au cours du temps de différentes forces exercées par des vérins du système, au cours de la séquence de mise sous contrainte correspondant à la figure 9,

- la figure 11 représente schématiquement la séquence de mise sous contrainte des figures 9 et 10.

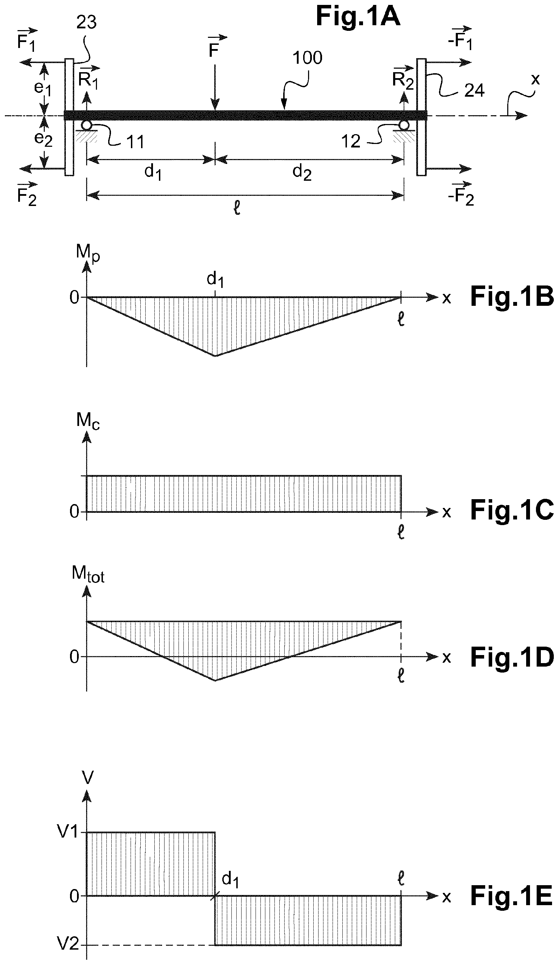

La méthode et le système 1 décrits ci-dessous, qui permettent de caractériser la résistance à l'effort tranchant d'une poutre 100, sont basés sur une configuration originale de mise sous contrainte de la poutre qui est illustrée schématiquement sur les figures 1A à 1E.

La poutre 100 à caractériser, ici en béton armé, présente une forme allongée selon un axe longitudinal x. Elle présente, le long de cet axe, trois tronçons distincts, à savoir :

- une portion d'épreuve 130, qui occupe une partie médiane de la poutre,
- une première portion d'extrémité 110, et
- une deuxième portion d'extrémité 120,

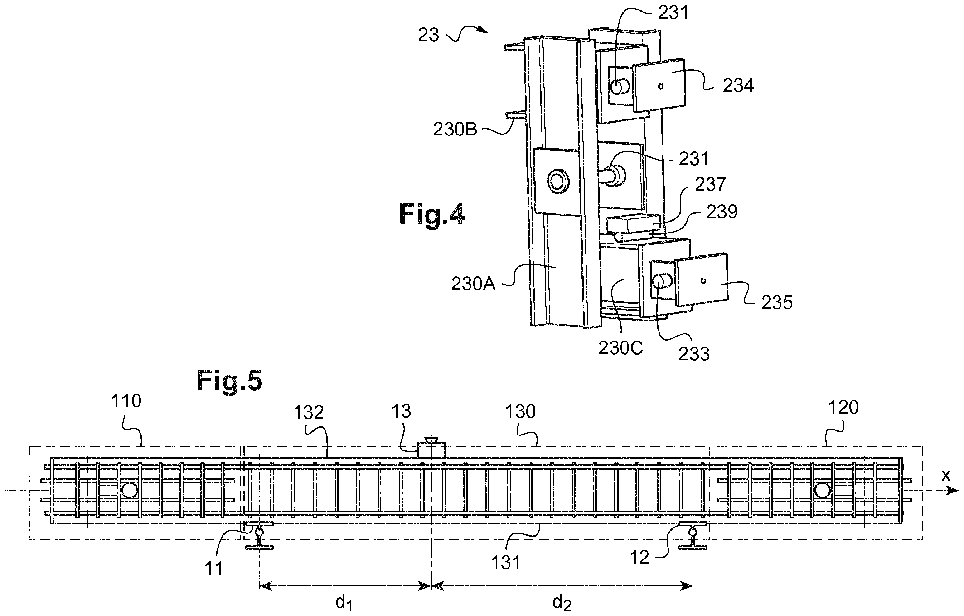

les première et deuxième portions d'extrémités 110 et 120 étant situées respectivement de part et d'autre de la portion d'épreuve 130 (figure 5).

La méthode et le système 1 décrits ci-dessous permettent plus précisément de caractériser la résistance à l'effort tranchant de la portion d'épreuve 130 de la poutre.

Comme représenté sur la figure 1A, pour tester la résistance à l'effort tranchant de la portion d'épreuve 130, cette portion est soumise à des forces, $\vec{F}$, $\vec{R}_1$, $\vec{R}_2$, perpendiculaires à son axe longitudinal x et opposées les unes aux autres, si bien que la poutre est soumise à un cisaillement.

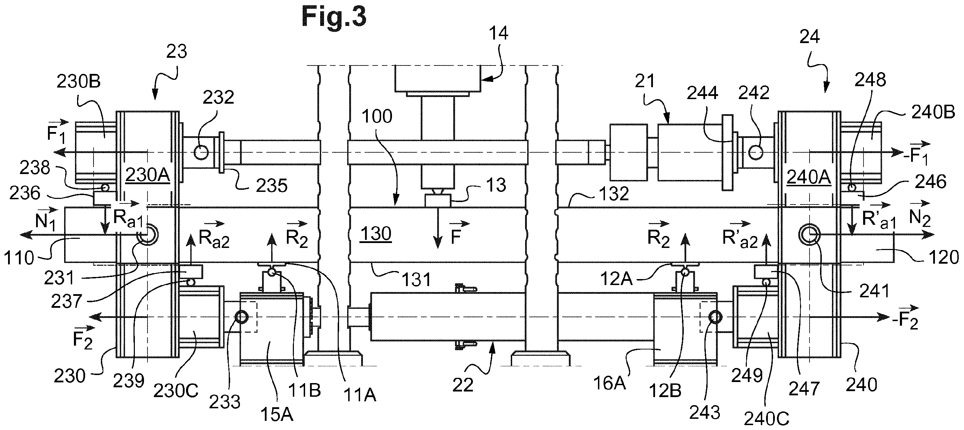

Dans le mode de réalisation décrit ici, la portion d'épreuve 130 prend appui latéralement sur un premier appui 11 et sur un deuxième appui 12, tandis qu'un vérin principal 14 exerce sur cette portion une force de mise en flexion $\vec{F}$. Cette force, qui est exercée sur la poutre via une pièce d'appui 13, est appliquée entre le premier appui 11 et le deuxième appui 12, transversalement par rapport à la poutre. Les premier et deuxième appuis 11 et 12 appuient sur une même face latérale inférieure 131 de la poutre, tandis que la pièce d'appui 13 appuie sur une face latérale supérieure 132 de la poutre (opposée à la face latérale inférieure 131 - figures 3 et 5). Les forces de réaction des premier et deuxième appuis 11 et 12 sont notées respectivement $\vec{R}_1$ et $\vec{R}_2$.

En variante, au lieu d'être mise en flexion entre les trois appuis 11, 12 et 13 (flexion dite « 3 points »), la portion d'épreuve de la poutre pourrait par exemple être mise en flexion entre quatre appuis (flexion dite « 4 points »), ou subir une charge transversale répartie le long de sa portion d'épreuve.

Du fait de l'application de la force de mise de flexion $\vec{F}$, la poutre 100 est soumise non seulement à un effort tranchant, mais aussi à un moment fléchissant, appelé moment fléchissant principal $M_P$ dans la suite.

La figure 1B représente schématiquement l'évolution du moment fléchissant principal $M_P$, le long de l'axe longitudinal x de la poutre. Comme on peut le voir sur cette figure, ce moment est nul au niveau des premier et deuxième appuis 11 et 12, tandis que sa valeur absolue est maximale au niveau du point d'application de la force de mise en flexion $\vec{F}$. L'effort tranchant correspondant est égal à la dérivée du moment fléchissant principal $M_P$, en fonction de l'abscisse x le long de l'axe longitudinal x de la poutre. Pour que l'effort tranchant atteigne des valeurs élevées, il est nécessaire d'exercer une force de mise en flexion importante, si bien que le moment fléchissant principal atteint alors lui aussi des valeurs élevées.

De manière remarquable, il est alors prévu d'exercer sur la poutre des forces de contre-flexion, dont résulte un moment fléchissant de compensation $M_C$ qui s'oppose au moment fléchissant principal dû à ladite force de mise en flexion.

Ce moment fléchissant de compensation $M_C$ joue le rôle d'un "contre-moment" : il permet de réduire le moment fléchissant total $M_{tot}$ subi par la poutre, tout en conservant un effort tranchant V élevé.

Appliquer les forces de contre-flexion (dont résulte ce moment fléchissant de compensation $M_C$), en plus de la force de mise en flexion $\vec{F}$ exercée par le vérin principal 14, permet alors avantageusement d'atteindre la rupture par effort tranchant avant d'atteindre la rupture due au moment de flexion, et cela y compris pour des poutres dont le ferraillage et la section sont réalistes, représentatives de poutres employées en pratique dans les bâtiments et ouvrages d'art.

Dans le mode de réalisation décrit ici, il est prévu plus précisément d'exercer (figure 3) :

- deux forces de contre-flexion $\vec{R}_{a1}$, $\vec{R}_{a2}$ sur la première portion d'extrémité 110, et

- deux autres forces de contre-flexion $\vec{R}'_{a1}$, $\vec{R}'_{a2}$ sur la deuxième portion d'extrémité 120.

Chacun de ces deux couples de forces $\vec{R}_{a1}$, $\vec{R}_{a2}$ et $\vec{R}'_{a1}$, $\vec{R}'_{a2}$, s'oppose à la flexion de la poutre induite par la force de mise en flexion $\vec{F}$.

Les forces de contre-flexion sont appliqués de manière à ne pas contraindre le déplacement des extrémités de la poutre, perpendiculairement à l'axe longitudinal x de la poutre. On évite ainsi que des sollicitations parasites supplémentaires ne soient exercées sur la poutre.

La résultante des forces exercées sur la première portion d'extrémité 110 a donc, selon une quelconque direction perpendiculaire à l'axe longitudinal x de la poutre, une composante nulle. Il en est de même de la résultante des forces exercées sur la deuxième portion d'extrémité 120.

En conséquence, le moment de compensation $M_C$ résultant de l'application de ces forces présente une valeur constante le long de la poutre 100, comme le montre la figure 1C.

Comme le moment de compensation $M_C$ est constant le long de la poutre, l'effort tranchant V subi par la poutre (égal à la dérivée du moment total $M_{tot}$ par rapport à l'abscisse x) dépend uniquement de la force de mise en flexion $\vec{F}$ exercée par le vérin principal 14.

Appliquer comme ici les forces de contre-flexion, de manière à laisser les extrémités de la poutre libres de se déplacer, permet ainsi que l'effort tranchant V dépend uniquement de la force exercée par le vérin principal (l'effort tranchant est alors indépendant des forces de contre-flexion, exercées au moyen de vérins additionnels), ce qui simplifie avantageusement le pilotage des vérins lors d'essais de rupture par effort tranchant.

Les figures 1B, 1C et 1D représentent respectivement le moment fléchissant principal $M_P$, le moment fléchissant de compensation $M_C$, et le moment fléchissant total $M_{tot}$ subi par la poutre 100, en fonction de l'abscisse $x$ le long de l'axe longitudinal de la poutre, avec la convention de signe dite des efforts à gauche (le moment $M_P$ représente alors le moment exercé, par un tronçon de la poutre 100 qui s'étend à gauche d'une section de la poutre, sur le tronçon de la poutre qui s'étend à droite de cette même section ; en l'occurrence, la première portion d'extrémité 110 est située du côté gauche de la poutre).

Le moment fléchissant total $M_{tot}$ est égal à la somme du moment fléchissant principal $M_P$ et du moment fléchissant de compensation $M_C$. Comme le moment fléchissant de compensation $M_C$ s'oppose au moment fléchissant principal $M_P$, ces deux moments sont de signes opposés. On comprend alors que l'application du moment fléchissant de compensation $M_C$ permet de réduire la valeur maximale atteinte par le moment fléchissant total $M_{tot}$ (en valeur absolue), tout en conservant un effort tranchant V élevé.

La figure 1E représente schématiquement l'évolution de l'effort tranchant V le long de la portion d'épreuve de la poutre. Entre le premier appui 11 et le point d'application de la force de mise en flexion, l'effort tranchant V présente une première valeur V1 constante. Entre le point d'application de la force de mise en flexion et le deuxième appui 12, l'effort tranchant présente une deuxième valeur V2, également constante.

La premier valeur V1 est égale à $F.d_2/l$, où F est la norme de la force de mise en flexion, I est la distance entre le premier appui 11 et le deuxième appui 12, et $d_2$ la distance entre le deuxième appui 12 et le point d'application de la force de mise en flexion, mesurée le long de l'axe longitudinal x de la poutre (figures 1A et 5).

La deuxième valeur V2 est quant à elle égale à $- F.d_1 / l$, où $d_1$ est la distance entre le premier appui 11 et le point d'application de la force de mise en flexion, mesurée le long de l'axe longitudinal x de la poutre.

Dans le mode de réalisation décrit ici, le point d'application de la force de mise en flexion n'est pas situé à égale distance entre les premier et deuxième appuis 11, 12. Autrement formulé, la distance $d_1$ est différente de la distance $d_2$. Grâce à cette disposition, la valeur absolue de l'effort tranchant est plus grande d'un côté de la pièce d'appui 13 que de l'autre, ce qui permet de savoir à l'avance de quel côté aura lieu la rupture par effort tranchant. Seule la partie de la poutre où aura lieu la rupture est alors équipée de capteurs de déformation (jauges de déformation par exemple), et visualisée au moyen d'une caméra (pour une analyse des déformations par corrélation d'images). Cela permet de réduire avantageusement le nombre de capteurs nécessaires pour l'étude de la rupture de la poutre.

Plus précisément, il est prévu ici qu'un écart relatif

$$\frac{|d_1 - d_2|}{d_1 + d_2}$$

entre la distance $d_1$ et la distance $d_2$ soit supérieur à 10%, pour assurer que la rupture par effort tranchant ait lieu d'un côté de la pièce d'appui 13, plutôt que de l'autre.

En variante ou en combinaison, pour obtenir à coup sûr une rupture de la poutre d'un côté du point d'appui précité, plutôt que de l'autre, on pourrait employer une poutre dont le ferraillage longitudinal est plus important d'un côté que de l'autre.

## Système pour caractériser la résistance à l'effort tranchant de la poutre

Le système 1 qui permet d'appliquer à la poutre 100 les contraintes décrites ci-dessus peut maintenant être décrit.

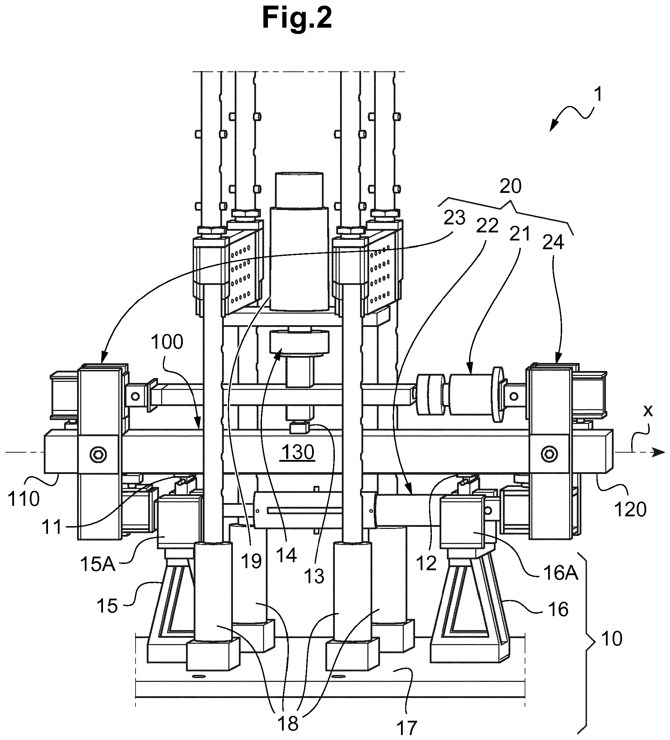

La figure 2 représente les principaux éléments de ce système 1 (à l'exception de son unité de commande, qui n'est pas représentée sur les figures).

Il comprend :

- un premier dispositif de mise sous contrainte 10, configuré notamment pour exercer sur la poutre la force de mise en flexion $\vec{F}$ mentionnée plus haut, et
- un deuxième dispositif de mise sous contrainte 20, pour exercer sur la poutre 100 les forces de contre-flexion dont résulte le moment fléchissant de compensation $M_C$.

Le premier dispositif de mise sous contrainte 10 comprend :

- le premier appui 11 et le deuxième appui 12,
- deux tréteaux 15 et 16 supportant respectivement le premier appui 11 et le deuxième appui 12,
- une dalle 17 supportant les deux tréteaux 15 et 16,
- un support pour le vérin principal 14, réalisé ici au moyen de quatre colonnes 18 qui s'étendent perpendiculairement à la dalle 17, ce support étant ancré dans la dalle 17, et
- le vérin principal 14, dont le corps 19 est solidaire du support précité.

L'axe qui passe par le premier appui 11 et par le deuxième appui 12 est horizontal. Lors des essais de rupture, la poutre 100 à tester, qui prend appui le premier appui 11 et sur le deuxième appui 12, s'étend donc horizontalement.

La tige du vérin principal 14 s'étend quant à elle verticalement. L'axe défini par cette tige passe entre le premier appui 11 et le deuxième appui 12. La pièce d'appui 13 est montée à une extrémité inférieure de la tige du vérin principal 14.

Le premier appui 11, de même que le deuxième appui 12, comprend une plaque 11A, 12A, destinée à recevoir la face latérale inférieure 131 de la poutre 100 à tester. Cette plaque 11A, 12A s'appuie sur le tréteau correspondant 15, 16 par l'intermédiaire d'un rouleau 11B, 12B (on évite ainsi de transmettre un moment à la poutre au niveau des premier et deuxième appuis).

Le deuxième dispositif de mise sous contrainte 20, qui est distinct (et même disjoint) du premier dispositif de mise sous-contrainte, comprend un premier et un deuxième vérin additionnel 21 et 22, ainsi qu'une première bride 23 et une deuxième bride 24 pour transmettre à la poutre les efforts exercés par ces vérins.

La tige du premier vérin additionnel 21 est reliée à la première bride 23 par une liaison pivot 232, tandis que le corps de ce vérin est relié à la deuxième bride 24, par une autre liaison pivot 242.

La tige du deuxième vérin additionnel 22 est reliée elle aussi à la première bride 23, par une liaison pivot 233, tandis que le corps de ce vérin est relié à la deuxième bride 24, là encore par une liaison pivot, 243.

L'ensemble comprenant les première et deuxième brides 23 et 24, et les premier et deuxième vérins additionnels 21 et 22, forme ainsi un cadre à quatre montants (à quatre cotés). Deux des montants de ce cadre, opposés l'un à l'autre, sont formés respectivement par la première bride 23 et par la deuxième bride 24. Les deux autres montants sont formés respectivement par les premier et deuxième vérins additionnels 21 et 22.

Les première et deuxième brides 23, 24, décrites en détail plus bas, sont configurées chacune pour être montée sur l'une des portions d'extrémité 110, 120 de la poutre.

Une fois les première et deuxième brides 23, 24 montées sur la poutre 100, les premier et deuxième vérins additionnels 21 et 22 s'étendent chacun parallèlement à l'axe longitudinal x de la poutre (et donc horizontalement). Les deux axes, définis respectivement par les tiges des premier et deuxième vérins additionnels 21 et 22, et l'axe longitudinal x de la poutre sont alors situés dans un même plan, ici vertical, qui est parallèle à l'axe de la tige du vérin principal 14. Le premier vérin additionnel 21 est situé au-dessus de la poutre 100, tandis que le deuxième vérin additionnel 22 est situé en dessous de la poutre 100.

Dans l'exemple représenté sur les figures, en position d'usage, la première bride 23 est montée sur la première portion d'extrémité 110 de la poutre, tandis que la deuxième bride 24 est montée sur la deuxième portion d'extrémité 120 de cette poutre.

En l'absence de la poutre 100, le deuxième dispositif de mise sous contrainte 20 est mobile librement par rapport au premier dispositif de mise sous contrainte 10.

Lors des essais de rupture, le deuxième dispositif de mise sous contrainte 20 est donc relié mécaniquement au premier dispositif de mise sous contrainte 10 seulement par l'intermédiaire de la poutre 100. En particulier, le deuxième dispositif de mise sous contrainte 20, qui est supporté directement par la poutre 100 elle-même, n'est pas relié à la dalle 17. On notera à ce sujet que le deuxième vérin additionnel 22 semble, sur les figures 2 et 3, en contact avec les tréteaux 15 et 16. Mais ce n'est pas le cas. Chacun de ces tréteaux 15, 16 comprend en effet une partie creuse 15A, 16A, à travers laquelle le deuxième vérin additionnel 22 passe sans entrer en contact avec les tréteaux.

Ainsi, le deuxième dispositif de mise sous contrainte 20 laisse avantageusement les première et deuxième portions d'extrémité 110, 120 de la poutre libres de se déplacer par rapport aux premier et deuxième appuis 11, 12, en particulier perpendiculairement par rapport à l'axe longitudinal x.

Les première et deuxième brides 23, 24 sont décrites maintenant plus en détail, en référence aux figures 3 et 4.

Ces deux brides 23, 24 sont configurées pour exercer sur les portions d'extrémité 110, 120 les forces de contre-flexion dont résulte le moment fléchissant de compensation $M_C$. Les forces de contre-flexion sont exercées ici au moyen de patins supérieurs 236, 246, et inférieurs 237, 247 appliqués respectivement sur les faces latérales inférieure 131 et supérieure 132 de la poutre.

Chacun des première et deuxième brides 23, 24 est configurée en outre pour exercer sur la poutre une force longitudinale moyenne $\overrightarrow{N_7}$, $\overrightarrow{N_2}$ afin de mettre la poutre en traction, ou éventuellement en compression. Ces deux forces longitudinales moyennes sont parallèles à l'axe longitudinal x de la poutre. Chacune de ces forces longitudinales moyennes est transmise à la poutre par l'intermédiaire d'une goupille 231, 241 qui traverse la poutre 100 et qui traverse aussi l'armature 230, 240 de la bride 23, 24 correspondante.

L'armature 230, 240 de chaque bride 23, 24 est réalisée ici au moyen de profilés métalliques en U et/ou en I (tels que des profilés de type IPE300, ou HEB300), par exemple soudés ensemble. Cette armature présente ici globalement la forme d'un I majuscule, dont :

- la branche supérieure 230B, 240B est reliée au premier vérin additionnel 21,
- la branche inférieure 230C, 240C est reliée au deuxième vérin additionnel 22, et
- dont la branche verticale 230A, 240A, à travers laquelle passe la goupille 231, 241, chevauche la poutre 100.

Les branches supérieure et inférieure de l'armature étant reliées l'une à l'autre par sa branche verticale 230A, 240A.

Le premier vérin additionnel 21 agit (c'est-à-dire exerce une force) sur les brides 23, 24, respectivement par l'intermédiaire de deux plaques 234, 244 reliées chacune à la branche supérieure 230B, 240B de la bride correspondante par l'une des liaisons pivots 232, 242 mentionnées plus haut.

Le deuxième vérin additionnel 22 agit lui aussi sur les brides 23, 24, respectivement par l'intermédiaire de deux plaques 235 reliées chacune à la branche inférieure 230C, 240C de la bride correspondante par l'une des liaisons pivots 233, 243.

La branche supérieure 230B, 240B de la bride agit sur la face latérale supérieure 132 de la poutre par l'intermédiaire du patin supérieur 236, 246 (qui est appliqué contre cette face). Ce patin est relié à branche supérieure 230B, 240B de la bride par l'intermédiaire d'un rouleau 238, 248.

De manière comparable, la branche inférieure 230C, 240C de la bride 23, 24 agit sur la face latérale inférieure 131 de la poutre par l'intermédiaire du patin inférieur 237, 247 (qui est appliqué contre cette face). Ce patin est là encore relié à branche inférieure 230C, 240C de la bride par l'intermédiaire d'un rouleau 239, 249.

Lorsque la bride 23, 24 est en position d'usage sur la poutre, les patins supérieurs 236, 246 et inférieurs 237, 247 sont décalés l'un par rapport à l'autre, le long de l'axe longitudinal de la poutre.

Le premier et le deuxième vérins additionnels 21, 22 exercent respectivement sur la première bride 23 des forces $\vec{F_7}$ et $\vec{F_2}$ longitudinales, qui, toutes deux, sont dirigées parallèlement à l'axe longitudinal x de la poutre.

Les forces exercées respectivement par le premier et le deuxième vérins additionnels 21, 22 sur la deuxième bride 24 sont égales respectivement à $-\vec{F_1}$ et à $-\vec{F_2}$.

Les forces de contre-flexion $\vec{R}_{a1}$ et $\vec{R}_{a2}$ sont ici les forces de réaction exercées sur la poutre 100, respectivement par les patins supérieurs 236 et inférieurs 237 de la première bride 23.

Quant aux deux autres forces de contre-flexion $\vec{R'}_{a1}$ et $\vec{R'}_{a2}$, il s'agit ici des forces de réaction exercées sur la poutre 100, respectivement par les patins supérieurs 246 et inférieurs 247 de la première bride 24.

Dans le mode de réalisation décrit ici, les deux forces de contre-flexion $\vec{R}_{a1}$ et $\vec{R}_{a2}$ sont égales, respectivement, aux deux autres forces de contre-flexion $\vec{R'}_{a1}$ et $\vec{R'}_{a2}$.

Le moment fléchissant de compensation $M_C$ résulte de l'application de ces forces de réaction sur les première et deuxième portion d'extrémité 110, 120 de la poutre.

Employer ainsi les deux patins 236, 237 (respectivement 246, 247) pour soumettre la poutre à un tel moment moment, plutôt que d'utiliser un seul patin en combinaison avec la goupille 231 (respectivement 241), permet avantageusement d'éviter d'exercer une force perpendiculairement à l'axe longitudinal x au niveau de la goupille 231 (respectivement 241). Une telle force risquerait en effet de détériorer la poutre, qui, au voisinage de la goupille 231 (241), n'est pas nécessairement dimensionnée pour supporter des forces perpendiculaires à son axe longitudinal.

Les deux forces de contre-flexion $\vec{R}_{a1}$ et $\vec{R}_{a2}$ constituent un couple de forces égales à l'opposée l'une de l'autre. La somme des forces de réaction $\vec{R}_{a1}$ et $\vec{R}_{a2}$ est donc nulle, si bien que la force longitudinale moyenne $\vec{N_1}$ exercée sur la poutre par la goupille 231 est, comme déjà indiqué, parallèle à l'axe longitudinal de la poutre.

Il en est de même des deux autres forces de contre-flexion $\vec{R'}_{a1}$ et $\vec{R'}_{a2}$.

L'autre force longitudinale moyenne $\vec{N_2}$, égale à l'opposé de la force longitudinale moyenne $\vec{N_1}$, est exercée sur la poutre par la goupille 241 de la deuxième bride 24.

Pour chaque bride, l'un des patins, inférieur ou supérieur, comprend deux plaques, appliquées l'une contre l'autre, dont l'une au moins est en forme de coin. Cela permet, par enfoncement de la plaque en forme de coin, de bloquer la bride contre la poutre, même en présence d'un léger jeu de hauteur (entre les patins), ou de parallélisme (des branches supérieure et inférieure) de la bride par rapport à la poutre.

La distance entre l'axe de la liaison pivot 232, 242 et la fibre neutre de la fibre est notée e1, et celle entre l'axe de la liaison pivot 231, 241 et cette fibre neutre est notée e2.

La valeur du moment de compensation $M_C$ est donc donnée par l'équation E1 suivante :

$$M_C = F_1.e1 - F_2.e2 \quad (E1)$$

où $F_1$ et $F_2$ sont les normes, respectivement de la force $\vec{F_1}$ et de la force $\vec{F_2}$.

Quant à la force longitudinale moyenne $\vec{N_1}$, elle est égale à la somme des forces $\vec{F_1}$ et $\vec{F_2}$ :

$$\vec{N_1} = \vec{F_1} + \vec{F_2} \quad (E2).$$

En variante, des brides différentes de celles décrites ci-dessus, réalisées par exemple sous la forme de chapeaux entourant les portions d'extrémité de la bride, pourraient être employées pour transmettre à la poutre les efforts exercés par les premier et deuxième vérins additionnels.

La figure 5 représente schématiquement la poutre 100 dont la résistance à l'effort tranchant est caractérisée grâce au système 1.

Comme on le voit sur cette figure, les première et deuxième portions d'extrémité de la poutre 110 et 120 présentent un ferraillage spécifique, plus important que la portion d'épreuve 130, afin de résister aux forces longitudinales moyennes $\vec{N_1}$ et $\vec{N_2}$, et aux forces de contre-flexion $\vec{R}_{a1}$, $\vec{R}_{a2}$ $\vec{R'}_{a1}$ et $\vec{R'}_{a2}$ appliquées par les brides pour soumettre la poutre au moment fléchissant de compensation. En outre, les faces d'extrémités respectives de ces portions d'extrémité sont pourvues chacune d'une plaque d'about soudée aux armatures longitudinales.

En revanche, dans la portion d'épreuve 130, la poutre peut être dimensionnée librement (afin par exemple d'être identique, dans cette portion, à une poutre destinée à un bâtiment).

Dans l'exemple représenté, l'armature métallique de la poutre 100 est identique dans la partie supérieure de la poutre (du côté de la pièce d'appui 13), et dans sa partie inférieure (du côté des premier et deuxième appuis 11 et 12). On pourrait toutefois prévoir que cette armature soit plus importante dans la partie inférieure, ou dans la partie supérieure de la poutre. On pourrait de même prévoir que la répartition des armatures évolue le long de l'axe longitudinal de la poutre.

A titre d'exemple, la longueur de la portion d'épreuve 130 de la poutre représente ici un peu plus de la moitié de la longueur totale de la poutre, tandis que la longueur de chacune des portions d'extrémité 110, 120 représente un peu moins du quart de la longueur totale de la poutre. En pratique, la longueur totale de la poutre est au moins supérieure à 1 mètre.

Le système 1 comprend, en plus des éléments mécaniques décrits ci-dessus, une unité de commande (non représentée) configurée pour piloter le vérin principal 14 ainsi que les premier et deuxième vérins additionnels 21 et 22.

L'unité de commande comprend par exemple un ordinateur apte à piloter les pompes qui actionnent les vérins précités.

L'unité de commande est configurée pour piloter les premier et deuxième vérins additionnels 21, 22 et le vérin principal 14 de manière à ce que le moment fléchissant de compensation $M_C$ s'oppose au moment fléchissant principal $M_P$ dû à ladite force de mise en flexion $\vec{F}$, comme indiqué plus haut en référence aux figures 1A et 1B.

L'unité de commande est configurée plus précisément pour piloter les deux vérins additionnels 21, 22 et le vérin principal 14 :

- de manière à ce que le moment fléchissant total $M_{tot}$ subi par la poutre 100 reste, en valeur absolue, inférieur à un moment de rupture $M_R$ de la poutre, prédéterminé,

- tout en augmentant la force de mise en flexion $\vec{F}$ jusqu'à atteindre une rupture de la poutre 100.

Le moment de rupture $M_R$ en question peut être déterminée de différentes manières, décrites en détail plus bas (étape a) de la méthode de caractérisation décrite ci-dessous).

L'unité de commande peut être configurée pour piloter les deux vérins additionnels 21, 22 de manière, en outre, à appliquer les forces longitudinales moyennes $\vec{N_1}$ et $\vec{N_2}$ à la poutre 100, le moment de rupture $M_R$ étant alors déterminé en tenant compte du fait que la poutre subit en outre les contraintes de traction ou de compression engendrées par les forces longitudinales.

Plus généralement, l'unité de commande est configurée pour mettre en œuvre l'étape c) de la méthode de caractérisation décrite ci-dessous.

Méthode pour caractériser la résistance à l'effort tranchant de la poutre

Le système 1 qui a été décrit ci-dessus permet de mettre en œuvre une méthode de caractérisation de la résistance à l'effort tranchant d'une poutre pour bâtiment, au cours de laquelle la poutre est mise sous contrainte comme expliqué plus haut, en référence aux figures 1A à 1E.

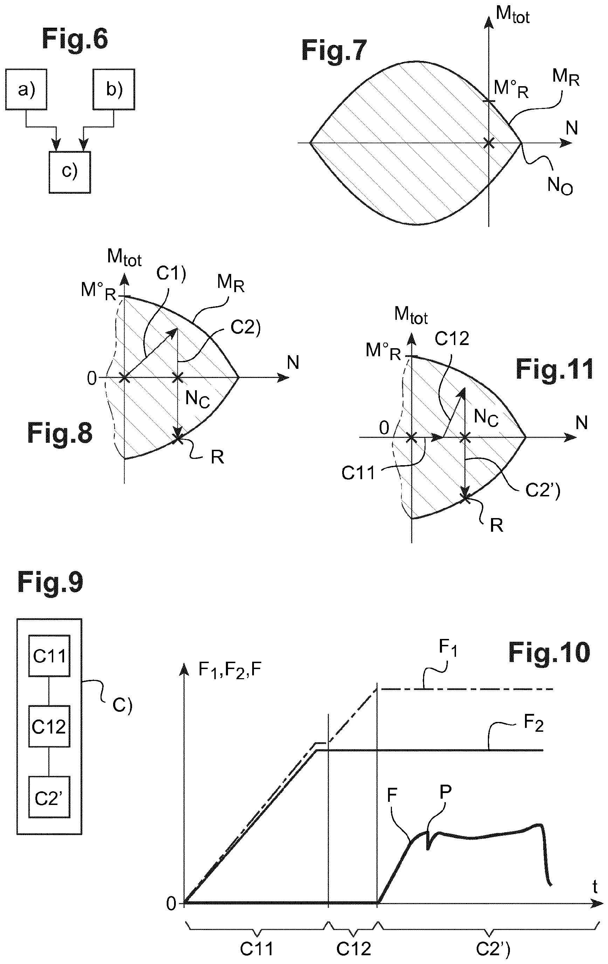

Cette méthode comprend notamment les étapes suivantes (figure 6) :

a) détermination du moment de rupture $M_R$ de la poutre 100,
b) mise en place de la poutre 100 sur le système 1 destiné à la caractériser,
c) application des efforts mentionnés plus haut, jusqu'à atteindre la rupture de la poutre 100.

Etape a) : détermination du moment de rupture $M_R$ de la poutre 100

Le moment de rupture $M_R$ de la poutre est le moment fléchissant seuil, au-delà duquel la poutre rompt sous l'effet de la flexion qu'elle subit.

A l'étape c) (qui sera décrite plus bas), le couple de forces longitudinales moyennes $\vec{N_1}$ et $\vec{N_2}$ est appliqué sur la poutre lorsque l'on souhaite étudier expérimentalement l'influence d'une contrainte de traction ou de compression sur la résistance de la poutre à l'effort tranchant (essais mixtes de traction-flexion).

Mais l'application d'une telle contrainte de traction ou de compression (contrainte qui, sur une section droite de la poutre, s'exerce perpendiculairement à cette section) modifie notablement la résistance de la poutre à un moment fléchissant. En particulier, exercer une contrainte de traction réduit nettement la valeur du moment de rupture $M_R$ de la poutre, si bien que la rupture par flexion risque encore plus de se produire avant celle par effort tranchant.

Pour atteindre une rupture par effort tranchant, lors d'essais mixtes de traction-flexion (ou, plus précisément, ici, de traction-cisaillement), il est donc important de déterminer le moment de rupture $M_R$, dont la valeur conditionne le pilotage des vérins, en tenant compte du fait que la poutre est soumise le couple de forces longitudinales moyennes $\vec{N_1}$ et $\vec{N_2}$.

La dépendance du moment de rupture $M_R$, en fonction de la valeur algébrique N de la force longitudinales moyenne $\vec{N_1}$, est représentée schématiquement sur la figure 7. Sur cette figure, les valeurs du moment de rupture $M_R$ sont reportées dans le plan (N, $M_{tot}$), pour différentes valeurs de N. Les valeurs de N positives correspondent au cas d'une contrainte de traction.

La valeur $M_R°$ du moment de rupture $M_R$ correspond au cas de forces longitudinales nulle (absence de traction ou de compression). A partir de cette situation, si l'on augmente progressivement la force longitudinale moyenne $\vec{N_1}$, dans le sens d'une traction, la valeur du moment de rupture $M_R$ diminue, et fini par s'annuler (lorsque N atteint la limite de résistance en traction pure No).

Si $M_{tot}$ est positif, tant que $M_{tot}$ reste inférieur à $M_R$, la poutre résiste aux contraintes appliquées sans se rompre. Mais si $M_{tot}$ dépasse $M_R$, la poutre se rompt par flexion.

De manière comparable, lorsque $M_{tot}$ est négatif, tant que $M_{tot}$ reste supérieur à $M_R$, la poutre résiste aux contraintes appliquées sans se rompre, et se rompt si $M_{tot}$ devient inférieur à $M_R$, en valeur algébrique.

Ces deux conditions sont traduites graphiquement sur la figure 7 : sur cette figure, la zone hachurée délimitée par la ligne $M_R(N)$ correspond à l'ensemble des états de contrainte qui satisfont les deux conditions mentionnées ci-dessus. Ainsi, si l'état de contrainte de la poutre correspond à un point du plan (N, $M_{tot}$) situé à l'intérieur de cette zone hachurée, la poutre résiste aux contraintes appliquées sans se rompre. En revanche si les forces appliquées à la poutre l'amène hors de cette zone hachurée, elle rompt.

Le moment de rupture $M_R$ de la poutre (tracé sur la figure 7), qui intervient ensuite dans le pilotage des vérins réalisé à l'étape c), peut être déterminé notamment :

> i) par des essais préliminaires de rupture par flexion,
> ii) au moyen de calculs réalisés conformément à un code de calcul normalisé ou réglementaire, ou encore
> iii) au moyen de calculs réalisés conformément à une méthode de calcul spécifique, cette méthode ayant été préalablement validée par essais de rupture ou par confrontation avec un code de calcul normalisé ou réglementaire.

Comme déjà indiqué, lorsque la poutre est soumise aux forces longitudinales moyennes $\vec{N_1}$ et $\vec{N_2}$, le moment de rupture $M_R$ est déterminé en tenant compte de l'application de ces forces.

Dans le cas i, les essais de rupture préliminaires sont réalisés sur une, ou de préférence plusieurs poutres de test identiques à la poutre 100 mentionnée plus haut. Ces essais préliminaires sont par exemple réalisés au moyen du système 1 décrit plus haut, mais sans appliquer les forces de contre-flexion, afin d'obtenir une rupture par flexion et non par effort tranchant. Pour chaque poutre de test, un moment à rupture $M_{R1}$, $M_{R2}$, ... de la poutre est déterminé à partir de la valeur de la force F (exercée par le vérin principal 14) nécessaire pour rompre la poutre (via la relation $M_{Ri} = F.d_1.d_2/(d_1+d_2)$). Le moment de rupture $M_R$, attendu pour la poutre 100, est alors déterminé en fonction des moments à rupture $M_{R1}$, $M_{R2}$, ... ainsi mesurés. Par exemple, le moment de rupture $M_R$ de la poutre 100 peut être déterminé comme étant égal à la moyenne arithmétique des moments à rupture $M_{R1}$, $M_{R2}$, ..., ou être déterminé comme étant égal au plus petit des moments à rupture $M_{R1}$, $M_{R2}$, ... ainsi mesurés.

Si un essai de traction-cisaillement est envisagé, ces essais de rupture préliminaires sont réalisés en appliquant la force de traction envisagée, à chaque extrémité de la poutre.

Dans le cas ii, le moment de rupture $M_R$, attendu pour la poutre 100, est égal à un moment de rupture théorique de la poutre qui est déterminé par calculs, en fonction des caractéristiques (dimension, armatures, ...) de la poutre, conformément au code de calcul normalisé ou réglementaire mentionné plus haut.

Le code de calcul normalisé, ou réglementaire, est par exemple le code de calcul officiel, en vigueur dans un pays ou un ensemble de pays. A titre d'exemple, ce calcul peut être effectué conformément à l'Eurocode 2, ou encore conformément à la norme canadienne « CAN/CSA-A23.3-F04 (C2010) - Calcul des ouvrages en béton ». Dans le cas de l'Eurocode 2, le calcul du moment de rupture $M_R$ sera effectué conformément à la section 6.1 de ce code (« flexion simple et flexion composée »).

Dans le cas iii, le moment de rupture $M_R$, attendu pour la poutre 100, peut par exemple être déterminé conformément aux dispositions des paragraphes 2.3 à 2.7 de la thèse de doctorat « Analyse par le calcul à la rupture de la stabilité au feu des panneaux en béton armé de grandes dimensions » soutenue par Duc Toan PHAM le 15 décembre 2014 à l'université de Paris-Est (pages numérotées 35 à 56 de ce document, publié sous la référence tel-01131232 sur l'archive HAL). Dans ce cas, le calcul est mené en se plaçant dans le cas simplifié d'une température homogène dans la poutre. L'avantage de la méthode de calcul présentée dans ce document est qu'elle permet, lorsqu'un effort de traction ou de compression est appliqué sur la poutre, de déterminer le moment de rupture $M_R$ plus rapidement qu'avec un code de calcul normalisé tel que l'Eurocode 2 (elle nécessite moins de ressources, en termes de calcul). La validation de cette méthode de calcul, par confrontation avec les prédictions de l'Eurocode, est discutée en page 54 de ce document.

Etape c) : mise sous contrainte et rupture de la poutre

Comme déjà indiqué, lors de l'étape c), les vérins 14, 21 et 22 sont pilotés de manière à atteindre la rupture par effort tranchant, tout en évitant la rupture par flexion grâce au moment fléchissant de compensation $M_C$.

Pour cela, différentes séquences de mise en charge de la poutre sont envisageables.

Un premier exemple d'une telle séquence est représenté schématiquement sur la figure 8, dans le plan (N, $M_{tot}$). Dans cet exemple, l'étape c) comprend :

- une étape c1), au cours de laquelle les premier et deuxième vérins additionnels 21 et 22 sont pilotés de manière à soumettre progressivement la poutre au moment fléchissant de compensation $M_C$, et à la contrainte de traction résultant des forces longitudinales, puis
- une étape c2) au cours de laquelle le vérin principal est piloté de manière à augmenter progressivement l'intensité F de la force de mise en flexion, jusqu'à atteindre la rupture R de la poutre.

Au cours de l'étape c1), les vérins additionnels sont pilotés de manière à ce que l'intensité de la force $\vec{F_1}$ soit, à chaque instant, supérieure à celle de la force $\vec{F_2}$, pour maintenir les patins 236, 237, 246, 247 au contact de la poutre 100.

Par ailleurs, les intensités respectives de ces deux forces sont augmentées conjointement, de manière à augmenter simultanément la valeur du moment fléchissant de compensation $M_C$, et la contrainte de traction (figure 8).

Pendant cette étape c1), le moment principal $M_P$ est encore nul, et le moment total $M_{tot}$ est égal directement au moment fléchissant de compensation $M_C$. Les vérins additionnels 21, 22 sont donc pilotés de manière à augmenter la valeur du moment fléchissant de compensation $M_C$, mais, bien sûr, sans dépasser le moment de rupture $M_R$. A titre d'exemple, à la fin de l'étape c1), le moment fléchissant de compensation $M_C$, et donc aussi le moment total $M_{tot}$, sont légèrement inférieurs au moment de rupture $M_R(N_c)$ (par exemple de quelques pour cent), où $N_c$ est la force longitudinale cible, sous laquelle on souhaite réaliser l'essai de rupture par effort tranchant.

Les forces $\vec{F_1}$ et $\vec{F_2}$ atteintes au terme de l'étape c1) sont ensuite maintenues constantes pendant l'étape c2) suivante.

Un deuxième exemple de séquence de mise en charge de la poutre est représenté schématiquement sur les figures 9 à 11. Dans de deuxième exemple, l'étape c) comprend :

- une étape c11, au cours de laquelle les premier et deuxième vérins additionnels 21 et 22 sont pilotés de manière à soumettre progressivement la poutre à la contrainte de traction résultant des forces longitudinales, puis
- une étape c12 au cours de laquelle les premier et deuxième vérins additionnels 21 et 22 sont pilotés de manière à soumettre la poutre, en outre, au moment fléchissant de compensation $M_C$, et
- une étape c2') au cours de laquelle le vérin principal est piloté de manière à augmenter progressivement l'intensité F de la force de mise en flexion, jusqu'à atteindre la rupture R de la poutre.

Au cours de l'étape c11, les vérins additionnels sont pilotés de manière à ce que l'intensité de la force $\vec{F_1}$ soit légèrement supérieure, par exemple de quelques Kilonewtons, à celle de la force $\vec{F_2}$, là aussi pour maintenir les patins 236, 237, 246, 247 au contact de la poutre 100. Les intensités de ces deux forces augmentent conjointement au cours du temps (figure 10).

Au cours de l'étape c12, les vérins additionnels sont pilotés de manière à ce que la force $\vec{F_2}$ reste constante, tandis que l'intensité de la force F1 augmente. Au cours de cette étape, la contrainte de traction augmente donc légèrement, et le moment fléchissant de compensation $M_C$ passe d'une valeur presque nulle à une valeur légèrement inférieure à $M_R(N_c)$.

Les forces $\vec{F_1}$ et $\vec{F_2}$ atteintes au terme de l'étape c12 sont ensuite maintenues constantes pendant l'étape c2') suivante. Pour l'exemple de poutre de la figure 5, d'environ 4 mètres de long, les valeurs atteintes par ces forces à l'issu de l'étape c12 sont de l'ordre de la centaine de Kilonewton (comprises entre 100 et 500 Kilonewtons, par exemple).

Au cours de l'étape c2'), le vérin principale 14 est piloté en déplacement (à vitesse constante) pour appliquer progressivement l'effort tranchant V. Le pilotage en déplacement jusqu'à la ruine complète de la poutre permet d'observer les phénomènes postérieurs au pic d'effort maximal P.

Plusieurs autres séquences de mise en charge, permettant d'atteindre la rupture par effort tranchant, tout en évitant la rupture par flexion grâce au moment fléchissant de compensation $M_C$, peuvent être envisagées.

Cette souplesse dans le choix de la séquence de chargement est permise notamment par le fait que les limites de ruptures de la poutre sont indépendantes des caractéristiques élastiques des matériaux constitutifs, d'un éventuel état d'auto-contrainte initial, et du trajet de chargement suivi pour aboutir aux limites de ruptures (comme cela est montré dans l'ouvrage suivant : « Plasticité et calcul à la rupture », P. de Buhan, 2007, Presses de l'Ecole Nationale des Ponts et Chaussées).

Parmi les autres séquences envisageables, on pourrait par exemple prévoir :

- pendant une première phase, d'augmenter conjointement, progressivement, l'intensité des forces $\overrightarrow{F_1}$ et $\overrightarrow{F_2}$, et celle de la force de mise en flexion $\vec{F}$, de manière à maintenir le moment total à une valeur quasiment nulle, puis

- dans une deuxième phase, de maintenir constante l'intensité des forces $\overrightarrow{F_1}$ et $\overrightarrow{F_2}$, et d'augmenter seulement celle de la force de mise en flexion, jusqu'à la rupture.

Cela permet, à la différence des séquences précédentes, d'éviter de soumettre la poutre à une moment fléchissant positif, ce qui est par exemple intéressant lorsque la poutre à tester ne présente pas ou peu d'armatures longitudinales dans sa partie supérieure. La première phase de la séquence qui vient d'être présentée peut par exemple est réalisée en venant positionner le vérin principal au contact de la poutre, puis en bloquant ce vérin en déplacement avant d'exercer le moment fléchissant de compensation au moyen des vérins additionnels 21, 22.

## Revendications

1.  Méthode de caractérisation de la résistance à l'effort tranchant d'une poutre (100), la poutre (100) comprenant une portion d'épreuve (130) qui s'étend entre deux portions d'extrémité de la poutre (110, 120), au cours de laquelle :

    - la poutre (100) prend appui transversalement sur un premier appui (11) et sur un deuxième appui (12),
    - un vérin principal (14) exerce sur la poutre (100) une force de mise en flexion ($\vec{F}$), ladite force étant appliquée entre le premier appui (11) et le deuxième appui (12), transversalement par rapport à la poutre (100), **caractérisée en ce que** des forces de contre-flexion ($\vec{R}_{a1}$, $\vec{R}'_{a1}$, $\vec{R}_{a2}$, $R'_{a2}$), dont résulte un moment fléchissant de compensation ($M_C$) qui s'oppose au moment fléchissant ($M_P$) dû à ladite force de mise en flexion ($\vec{F}$), sont exercées sur la poutre au moyen de deux vérins additionnels (21, 22).

2.  Méthode selon la revendication 1 dans laquelle :

    - la poutre (100) prend appui sur les premier et deuxième appuis (11, 12) au niveau de sa portion d'épreuve (130),
    - deux desdites forces de contre-flexion ($\vec{R}_{a1}$, $\vec{R}_{a2}$) sont exercées sur l'une des portions d'extrémité (110, 120) de la poutre au moyen d'une première bride (23) montée sur cette portion d'extrémité (110, 120),

    - deux autres desdites forces de contre-flexion ($\vec{R'}_{a1}$, $\vec{R'}_{a2}$) sont exercées sur l'autre portion d'extrémité (120, 110) de la poutre au moyen d'une deuxième bride (24) montée sur cette autre portion d'extrémité (120, 110), et dans laquelle
    - les deux vérins additionnels (21, 22) exercent, sur chacune des première et deuxième brides (23, 24), deux forces longitudinales ($\overrightarrow{F_1}$, $\overrightarrow{F_2}$, $-\overrightarrow{F_1}$, $-\overrightarrow{F_2}$) d'inégales intensités, parallèles à un axe longitudinal (x) de la poutre (100), dont résultent lesdites forces de contre-flexion ($\vec{R}_{a1}$, $\vec{R'}_{a1}$, $\vec{R}_{a2}$, $\vec{R'}_{a2}$) exercées sur la poutre (100).

3.  Méthode selon l'une des revendications 1 et 2, dans laquelle les deux vérins additionnels (21, 22) et le vérin principal (14) sont pilotés :

    - de manière à ce qu'un moment fléchissant total ($M_{tot}$) subi par la poutre (100) reste inférieur à un moment de rupture ($M_R$) de la poutre, prédéterminé,
    - tout en augmentant la force de mise en flexion ($\vec{F}$) jusqu'à atteindre une rupture de la poutre (100).

4.  Méthode selon les revendications 2 et 3, dans laquelle :

    - les deux vérins additionnels (21, 22) sont pilotés en outre de manière à ce que lesdites forces longitudinales ($\overrightarrow{F1}$, $\overrightarrow{F_2}$, $-\overrightarrow{F_1}$, $-\overrightarrow{F2}$) engendrent un effort normal de traction ou de compression dans la portion d'épreuve (130) de la poutre, et dans laquelle
    - ledit moment de rupture ($M_R$) est déterminé en tenant compte du fait que la poutre (100) est soumise audit effort normal de traction ou de compression.

5.  Méthode selon l'une des revendications 1 à 4, dans laquelle les deux vérins additionnels (21, 22) agissent sur les portions d'extrémité (110, 120) de la poutre tout en laissant ces portions d'extrémités libres de se déplacer perpendiculairement par rapport à un axe longitudinal (x) de la poutre (100).

6.  Méthode selon l'une des revendications 1 à 5, dans laquelle :

    - une première distance ($d_1$) sépare le premier appui (11) et un point d'application de ladite force de mise en flexion ($\vec{F}$),
    - une deuxième distance ($d_2$) sépare le deuxième appui (12) et ledit point d'application, et dans laquelle

un écart relatif entre la première distance ($d_1$) et la deuxième distance ($d_2$) est supérieur à 10 %.

7. Système (1) pour caractériser la résistance à l'effort tranchant d'une poutre (100), la poutre comprenant une portion d'épreuve (130) qui s'étend entre deux portions d'extrémité (110, 120) de la poutre (100), le système (1) comprenant :

   - un premier dispositif de mise sous contrainte (10) comportant au moins un premier appui (11) et un deuxième appui (12) pour la poutre (100), ainsi qu'un vérin principal (14) agencé pour exercer sur la poutre (100) une force de mise en flexion ($\vec{F}$), ladite force étant appliquée entre le premier appui (11) et le deuxième appui (12), transversalement par rapport à la poutre (100),

   le système (1) étant caractérisé en qu'il comprend en outre :

   - un deuxième dispositif de mise sous contrainte (20) comportant deux vérins additionnels (21, 22), agencés pour exercer sur la poutre des forces de contre-flexion ($\vec{R}_{a1}, \vec{R}'_{a1}, \vec{R}_{a2}, \vec{R}'_{a2}$), dont résulte un moment fléchissant de compensation ($M_C$) s'opposant au moment fléchissant ($M_P$) dû à ladite force de mise en flexion ($\vec{F}$).

8. Système (1) selon la revendication 7, dans lequel le deuxième dispositif de mise sous contrainte (20) comprend :

   - une première bride (23), configurée pour être montée sur l'une des portions d'extrémité (110, 120) de la poutre et pour, sous l'action des vérins additionnels (21, 22), exercer sur cette portion d'extrémité (110, 120) deux desdites forces de contre-flexion ($\vec{R}_{a1}, \vec{R}_{a2}$),
   - une deuxième bride (24) configurée pour être montée sur l'autre portion d'extrémité (120, 110) de la poutre et pour exercer sur cette portion d'extrémité (120, 110), sous l'action des vérins additionnels (21, 22), deux autres desdites forces de contre-flexion ($\vec{R}'_{a1}, \vec{R}'_{a2}$), et dans lequel
   - les deux vérins additionnels (21, 22) sont agencés de manière à exercer, sur chacune des première et deuxième brides (23, 24), deux forces longitudinales ($\vec{F1}, \vec{F_2}, -\vec{F_1}, -\vec{F_2}$) d'inégales intensités, parallèles à un axe longitudinal (x) de la poutre (100), dont résultent lesdites forces de contre-flexion ($\vec{R}_{a1}, \vec{R}'_{a1}, \vec{R}_{a2}, \vec{R}'_{a2}$).

9. Système (1) selon la revendication 8, dans lequel chacune des première bride (23) et deuxième bride (24) est configurée pour, en outre, transmettre à la portion d'extrémité (110, 120) correspondante de la poutre une force longitudinale moyenne ($\vec{N_1}, \vec{N_2}$), parallèle à un axe longitudinal (x) de la poutre, résultant des deux forces longitudinales ($\vec{F_1}, \vec{F_2}, -\vec{F_1}, -\vec{F_2}$) d'inégales intensités exercées sur ladite première ou deuxième bride (23, 24) par les vérins additionnels (21, 22).

10. Système (1) selon l'une des revendications 7 à 9, dans lequel le deuxième dispositif de mise sous contrainte (20) est en contact mécanique seulement avec la poutre (100), et agit sur les portions d'extrémité (110, 120) de la poutre tout en laissant ces portions d'extrémités (110, 120) libres de se déplacer perpendiculairement à un axe longitudinal (x) de la poutre.

11. Système (1) selon l'une des revendications 7 à 10, comprenant en outre une unité de commande configurée pour piloter les deux vérins additionnels (21, 22) et le vérin principal (14) de manière à ce qu'un moment fléchissant total ($M_{tot}$) subi par la poutre (100) reste inférieur à un moment de rupture ($M_R$) de la poutre, prédéterminé, tout en augmentant la force de mise en flexion ($\vec{F}$) jusqu'à atteindre une rupture de la poutre (100).

**Patentansprüche**

1. Methode zur Charakterisierung der Scherfestigkeit eines Balkens (100), wobei der Balken (100) einen Prüfabschnitt (130) aufweist, der sich zwischen zwei Endabschnitten (110, 120) des Balkens erstreckt, gemäß der

   - der Balken (100) auf einem ersten Auflager (11) und auf einem zweiten Auflager (12) quer aufliegt,
   - ein Hauptstempel (14) auf den Balken (100) eine Biegekraft ($\vec{F}$) ausübt, wobei die besagte Kraft zwischen dem ersten Auflager (11) und dem zweiten Auflager (12) auf den Balken (100) bezogen querverlaufend ausgeübt wird,

   **dadurch gekennzeichnet, daß** Gegenbiegekräfte ($\vec{R_{\alpha1}}, \vec{R}'_{a1}, \vec{R}_{a2}, \vec{R}'_{a2}$), aus denen ein Ausgleichsbiegemoment ($M_c$) resultiert, das sich dem durch die Biegekraft ($\vec{F}$) bedingten Biegemoment ($M_p$) entgegenstellt, mittels zweier zusätzlicher Stempel (21, 22) auf den Balken (100) ausgeübt werden.

2. Methode gemäß Anspruch 1, bei der

   - der Balken (100) im Bereich seines Prüfabschnitts (130) auf dem ersten und dem zweiten Auflager (11, 12) aufliegt,
- zwei der Gegenbiegekräfte ($\vec{R}_{a1}$, $\vec{R}_{a2}$) auf einen der Endabschnitte (110, 120) des Balkens mittels eines an diesem Endabschnitt (110, 120) angebrachten Flansches (23) ausgeübt werden,
- zwei andere der Gegenbiegekräfte ($\vec{R}'_{a1}$, $\vec{R}'_{a2}$) auf den anderen Endabschnitt (120, 110) des Balkens mittels eines zweiten, an dem anderen Endabschnitt (120, 110) angebrachten Flansches (24) ausgeübt werden, und bei der
- die beiden zusätzlichen Stempel (21, 22) auf jeden der ersten und zweiten Flansche (23, 24) zwei zu einer Längsachse (x) des Balkens (100) parallele Längskräfte ($\vec{F}_1$, $\vec{F}_2$, -$\vec{F}_1$, -$\vec{F}_{22}$) ungleicher Stärke ausüben, aus denen die auf den Balken (100) ausgeübten Gegenbiegekräfte ($\vec{R}_{a1}$, $\vec{R}'_{a1}$, $\vec{R}_{a2}$, $\vec{R}'_{a2}$) resultieren.

3. Methode gemäß einem der Ansprüche 1 und 2, bei der die beiden zusätzlichen Stempel (21, 22) und der Hauptstempel (14) so gesteuert werden,

- daß ein durch den Balken (100) erfahrenes Gesamtbiegemoment ($M_{tot}$) kleiner als ein vorbestimmtes Schermoment ($M_R$) des Balkens bleibt und
- dabei die Biegekraft ($\vec{F}$) soweit erhöht wird, bis eine Scherung des Balkens erfolgt.

4. Methode gemäß den Ansprüchen 2 und 3, bei der

- die beiden zusätzlichen Stempel (21, 22) außerdem so gesteuert werden, daß die Längskräfte ($\vec{F}_1$, $\vec{F}_2$,- $\vec{F}_1$, -$\vec{F}_2$) im Prüfabschnitt (130) des Balkens eine Zug- oder Druckquerbelastung erzeugen, und bei der
- das Schermoment ($M_R$) unter Berücksichtigung der Tatsache bestimmt wird, daß der Balken (100) der besagten Zug- oder Druckquerbelastung unterworfen ist.

5. Methode gemäß einem der Ansprüche 1 bis 4, bei der die beiden zusätzlichen Stempel (21, 22) auf die Endabschnitte (110, 120) wirken und dabei sich diese Endabschnitte senkrecht zu einer Längsachse (x) des Balkens (100) frei bewegen lassen.

6. Methode gemäß einem der Ansprüche 1 bis 5, bei der

- ein erster Abstand ($d_1$) das erste Auflager (11) von einem Ansatzpunkt der Biegekraft ($\vec{F}$) trennt,
- ein zweiter Abstand ($d_2$) das zweite Auflager (12) vom Ansatzpunkt trennt, und bei der

ein relativer Unterschied zwischen dem ersten Abstand ($d_1$) und dem zweiten Abstand ($d_2$) mehr als 10% beträgt.

7. System (1) zur Charakterisierung der Scherfestigkeit eines Balkens (100), wobei der Balken einen Prüfabschnitt (130) aufweist, der sich zwischen zwei Endabschnitten (110, 120) des Balkens (100) erstreckt, wobei das System (1)

- eine erste Belastungsvorrichtung (10) aufweist, die wenigstens ein erstes Auflager (11) und ein zweites Auflager (12) für den Balken (100) sowie einen Hauptstempel (14), der dazu ausgelegt ist, auf den Balken (100) eine Biegekraft ($\vec{F}$) auszuüben, aufweist, wobei die besagte Kraft zwischen dem ersten Auflager (11) und dem zweiten Auflager (12) quer zum Balken (100) ausgeübt wird,
wobei das System (1) **dadurch gekennzeichnet ist, daß** es außerdem
- eine zweite Belastungsvorrichtung (20) aufweist, die zwei zusätzliche Stempel (21, 22) aufweist, die dazu ausgelegt sind, auf den Balken Gegenbiegekräfte ($\vec{R}_{a1}$, $\vec{R}_{a1}$, $\vec{R}_{a2}$, $\vec{R}'_{a2}$) auszuüben, aus denen ein Ausgleichsbiegemoment ($M_c$) resultiert, das sich dem durch die Biegekraft ($\vec{F}$) bedingten Biegemoment ($M_p$) entgegenstellt.

8. System gemäß Anspruch 7, bei dem die zweite Belastungsvorrichtung (20)

- einen ersten Flansch (23), der dazu ausgelegt ist, an einem der Endabschnitte (110, 120) des Balkens angebracht zu werden und bei Betätigung der zusätzlichen Stempel (21, 22) auf diesen Endabschnitt (110, 120) zwei der Gegenbiegekräfte ($R_{a1}$, $R_{a2}$) auszuüben,
- einen zweiten (24) Flansch (24), der dazu ausgelegt ist, am anderen Endabschnitt (120, 110) angebracht zu werden und bei Betätigung der zusätzlichen Stempel (21, 22) auf diesen anderen Endabschnitt (120, 110) zwei andere der der Gegenbiegekräfte ($\vec{R}_{a1}$, $\vec{R}_{a2}$) auszuüben, aufweist und bei dem
- die beiden zusätzlichen Stempel (21, 22) dazu ausgelegt sind, auf jeden der ersten und zweiten Flansche (23, 24) zwei zu einer Längsachse (x) des Balkens (100) parallele Längskräfte ($\vec{F}_1$, $\vec{F}_2$, - $\vec{F}_1$, -$\vec{F}_2$) ungleicher Stärke auszuüben, aus denen die auf den Balken (100) ausgeübten Gegenbiegekräfte ($\vec{R}_{a1}$, $\vec{R}'_{a1}$, $\vec{R}_{a2}$, $\vec{R}'_{a2}$) resultieren.

9. System gemäß Anspruch 8, bei dem jeder der beiden Flansche, der erste Flansch (23) und der zweite Flansch (24), dazu ausgelegt ist, außerdem auf den entsprechenden Endabschnitt (110, 120) des Balkens eine zu einer Längsachse (x) des Balkens parallele mittlere Längskraft ($N_1$, $N_2$) zu übertragen, die aus den durch die zusätzlichen Stempel (21, 22) auf den ersten oder den zweiten Flansch (23, 24) ausgeübten beiden Längskräften ($\vec{F}_1$, $\vec{F}_2$, - $\vec{F}_1$, -$\vec{F}_2$) ungleicher Stärke resultieren.

10. System gemäß einem der Ansprüche 7 bis 9, bei dem die zweite Belastungsvorrichtung (20) nur mit dem Balken (100) in mechanischem Kontakt ist und auf die Endabschnitte (110, 120) des Bakens einwirkt und dabei sich diese Endabschnitte (110, 120) senkrecht zu einer Längsachse (x) des Balkens frei bewegen läßt.

11. System gemäß einem der Ansprüche 7 bis 10, das außerdem eine Steuereinheit aufweist, die dazu ausgelegt ist, die beiden zusätzlichen Stempel (21, 22) und den Hauptstempel (14) so zu steuern, daß ein durch den Balken (100) erfahrenes Gesamtbiegemoment ($M_{tot}$) kleiner als ein vorbestimmtes Schermoment ($M_R$) des Balkens bleibt und dabei die Biegekraft ($\vec{F}$) soweit erhöht wird, bis eine Scherung des Balkens (100) erfolgt.

**Claims**

1. A method for characterizing the shear force resistance of a beam (100), the beam (100) comprising a test portion (130) that extends between two end portions (110, 120) of the beam, during which:

   - the beam (100) bears transversely on a first support (11) and a second support (12),
   - a main cylinder (14) exerts on the beam (100) a bending force ($\vec{F}$), said force being applied between the first support (11) and the second support (12), transversely with respect to the beam (100),
   **characterized in that** counter-bending forces ($\vec{R}_{a1}$, $\vec{R}'_{a1}$, $\vec{R}_{a2}$, $\vec{R}'_{a2}$), from which results a compensating bending moment (Mc) that is opposed to the bending moment ($M_P$) due to said bending force ($\vec{F}$), are exerted on the beam by means of two additional cylinders (21, 22).

2. The method according to claim 1, wherein:

   - the beam (100) bears on the first and second supports (11, 12) at its test portion (130),
   - two of said counter-bending forces ($\vec{R}_{a1}$, $\vec{R}_{a2}$) are exerted on one of the end portions (110, 120) of the beam by means of a first flange (23) mounted on this end portion (110, 120),
   - two others of said counter-bending forces ($R'_{a1}$, $\vec{R}'_{a2}$) are exerted on the other end portion (120, 110) of the beam by means of a second flange (24) mounted on this other end portion (120, 110), and wherein
   - the two additional cylinders (21, 22) exert, on each of the first and second flanges (23, 24), two longitudinal forces ($\vec{F}_1$, $\vec{F}_2$, - $\vec{F}_1$, -$\vec{F}_2$) of unequal intensities, parallel to a longitudinal axis (x) of the beam (100), from which result said counter-bending forces ($\vec{R}_{a1}$, $\vec{R}'_{a1}$, $\vec{R}_{a2}$, $\vec{R}'_{a2}$) exerted on the beam (100).

3. The method according to one of claims 1 and 2, wherein the two additional cylinders (21, 22) and the main cylinder (14) are controlled:

   - in such a manner that a total bending moment ($M_{tot}$) undergone by the beam (100) remains lower than a predetermined breaking moment ($M_R$) of the beam,
   - while increasing the bending force ($\vec{F}$) until reaching a breaking of the beam (100).

4. The method according to claims 2 and 3, wherein:

   - the two additional cylinders (21, 22) are further controlled in such a manner that said longitudinal forces ($\vec{F}_1$, $\vec{F}_2$,- $\vec{F}_1$, -$\vec{F}_2$) generate a normal traction or compression effort in the test portion (130) of the beam, and wherein
   - said rupture moment ($M_R$) is determined taking into account the fact that the beam (100) is subjected to said normal traction or compression effort.

5. The method according to one of claims 1 to 4, wherein the two additional cylinders (21, 22) act on the end portions (110, 120) of the beam while letting these end portions free to move perpendicularly with respect to a longitudinal axis (x) of the beam (100).

6. The method according to one of claims 1 to 5, wherein:

   - a first distance ($d_1$) separates the first support (11) from a point of application of said bending force ($\vec{F}$),
   - a second distance ($d_2$) separates the second support (12) from said point of application, and wherein
   a relative spacing between the first distance ($d_1$) and the second distance ($d_2$) is higher than 10 %.

7. A system (1) for characterizing the shear force resistance of a beam (100), the beam comprising a test portion (130) that extends between two end portions (110, 120) of the beam (100), the system (1) comprising:

- a first stressing device (10) including at least a first support (11) and a second support (12) for the beam (100), as well as a main cylinder (14) arranged so as to exert on the beam (100) a bending force ($\vec{F}$), said force being applied between the first support (11) and the second support (12), transversely with respect to the beam (100), the system (1) being **characterized in that** it further includes:
- a second stressing device (20) including two additional cylinders (21, 22), arranged so as to exert on the beam counter-bending forces ($\vec{R}_{a1}$, $\vec{R}'_{a1}$, $\vec{R}_{a2}$, $\vec{R}'_{a2}$), from which results a compensating bending moment ($M_C$) that is opposed to the bending moment ($M_P$) due to said bending force ($\vec{F}$).

8. The system (1) according to claim 7, wherein the second stressing device (20) comprises:

- a first flange (23), configured to be mounted on one of the end portions (110, 120) of the beam and to exert on this end portion (110, 120), under the action of the additional cylinders (21, 22), two of said counter-bending forces ($\vec{R}_{a1}$, $\vec{R}_{a2}$),
- a second flange (24), configured to be mounted on the other end portion (120, 110) of the beam and to exert on this end portion (120, 110), under the action of the additional cylinders (21, 22), two others of said counter-bending forces ($\vec{R}'_{a1}$, $\vec{R}'_{a2}$), and wherein
- the two additional cylinders (21, 22) are arranged so as to exert, on each of the first and second flanges (23, 24), two longitudinal forces ($\vec{F}_1$, $\vec{F}_2$, $-\vec{F}_1$, $-\vec{F}_2$) of unequal intensities, parallel to a longitudinal axis (x) of the beam (100), from which result said counter-bending forces ($\vec{R}_{a1}$, $\vec{R}'_{a1}$, $\vec{R}_{a2}$, $\vec{R}'_{a2}$).

9. The system (1) according to claim 8, wherein each of the first flange (23) and second flange (24) is configured to further transmit to the corresponding end portion (110, 120) of the beam a mean longitudinal force ($\vec{N}_1$, $\vec{N}_2$), parallel to a longitudinal axis (x) of the beam, resulting from the two longitudinal forces ($\vec{F}_1$, $\vec{F}_2$, $-\vec{F}_1$, $-\vec{F}_2$) of unequal intensities exerted on said first or second flange (23, 24) by the additional cylinders (21, 22).

10. The system (1) according to one of claims 7 to 9, wherein the second stressing device (20) is in mechanical contact only with the beam (100), and acts on the end portions (110, 120) of the beam while letting these end portions (110, 120) free to move perpendicularly with respect to a longitudinal axis (x) of the beam.

11. The system (1) according to one of claims 7 to 10, further comprising a control unit configured to control the two additional cylinders (21, 22) and the main cylinder (14) in such a manner that a total bending moment ($M_{tot}$) undergone by the beam (100) remains lower than a predetermined breaking moment ($M_R$) of the beam, while increasing the bending force ($\vec{F}$) until reaching a breaking of the beam (100).

## Fig.1A

## Fig.1B

## Fig.1C

## Fig.1D

## Fig.1E

# Fig.2

EP 3 570 002 B1

Fig.3

18

**Fig.4**

**Fig.5**

# Fig.6

a) b)

c)

# Fig.7

# Fig.8

# Fig.11

# Fig.9

# Fig.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6918306 B1
- US 2017191916 A1
- US 6332364 B1
- US 2015276570 A1
- WO 2016001426 A1

**Littérature non-brevet citée dans la description**

- **DUC TOAN PHAM.** Analyse par le calcul à la rupture de la stabilité au feu des panneaux en béton armé de grandes dimensions. l'université de Paris-Est, 15 Décembre 2014, 35-56
- **P. DE BUHAN.** Plasticité et calcul à la rupture. Presses de l'Ecole Nationale des Ponts et Chaussées, 2007